Europäisches Patentamt

European Patent Office

Office européen des brevets

(11) Publication number: **0 419 242 B1**

# EUROPEAN PATENT SPECIFICATION

(45) Date of publication of patent specification: **21.12.94**  (51) Int. Cl.⁵: **C09J 133/04**, C09J 11/06

(21) Application number: **90310270.5**

(22) Date of filing: **19.09.90**

(54) **Acrylic aqueous dispersion type adhesive composition.**

(30) Priority: **19.09.89 JP 242624/89**

(43) Date of publication of application:
**27.03.91 Bulletin 91/13**

(45) Publication of the grant of the patent:
**21.12.94 Bulletin 94/51**

(84) Designated Contracting States:
**DE FR GB IT**

(56) References cited:
**FR-A- 2 114 127**

**PATENT ABSTRACTS OF JAPAN, vol. 11, no. 398 (C-466)[2845], 25th December 1987;& JP-A-62 158 769 (SUMITOMO) 14-07-1987**

(73) Proprietor: **MINNESOTA MINING AND MANU-FACTURING COMPANY**
**3M Center,**
**P.O. Box 33427**
**St. Paul, Minnesota 55133-3427 (US)**

(72) Inventor: **Masuzaki, Hisao**
**c/o Sumitomo 3M Limited,**
**Central P.O. Box 490 33-1**
**Tamagawadai 2-chome, Setagaya-ku, Tokyo (JP)**
Inventor: **Sugii, Shinji**
**c/o Sumitomo 3M Limited,**
**Central P.O. Box 490 33-1**
**Tamagawadai 2-chome, Setagaya-ku, Tokyo (JP)**

(74) Representative: **Baillie, Iain Cameron et al**
**c/o Ladas & Parry**
**Altheimer Eck 2**
**D-80331 München (DE)**

**Description**

This invention relates to microbicidal acrylic aqueous adhesive compositions. As used herein, the term microbicidal refers to the ability of the composition to either kill or control the growth of fungi or bacteria or yeast or molds, etc.

As conventional adhesives for use in adhering carpets and other materials to substrates, rubber-type, acrylic- type and other adhesives have been used. (Japanese Patent Application No. 411/86)

However, generally, rubber-type adhesives do not have sufficient microbicidal (particularly fungicidal) properties, especially in moist environments. Acrylic adhesives having relatively high microbicidal properties have been employed. However, they do not exhibit sufficient microbicidal properties when used to adhere carpets to morta-board with a high water content or when used as heat-insulating materials for air conditioners which easily generate dew condensation on the adhered parts.

FR-A-2,114,127 discloses aqueous emulsion paints and latex emulsions for such paints which incorporate a heavy metal salt of 2-mercaptopyridine-1-oxide and bromosalicylanide as microbicidal agents. The disclosed paints and emulsions are not adhesives.

It has now been discovered that the incorporation of microbicidal water-insoluble imidazole compounds and/or nitrogen-containing sulphur compounds into adhesives containing an acrylic copolymer emulsion as a main ingredient surprisingly enhances the adhesive properties of the composition while maintaining microbicidal properties.

Accordingly, the invention provides an acrylic aqueous dispersion-type adhesive composition characterized in that it contains an emulsion of an acrylic copolymer as a main ingredient, and a microbicidal agent selected from a water-insoluble imidazole compound and/or a nitrogen-containing sulfur compound.

Preferred features of the invention are defined in the dependent claims.

Such an acrylic aqueous dispersion-type adhesive composition may be used to stick down carpet or adhere heat-insulating materials in air conditioners, and has microbicidal properties.

As the acrylic copolymer used in the present invention, copolymers produced by the aqueous emulsion polymerization of acrylic acid and alkylester acrylate are preferred. The alkyl group of the alkylester acrylate preferably has from 1-12 carbon atom(s). Examples of such alkylester acrylates include methyl acrylate, ethyl acrylate, butyl acrylate, 2-ethylhexyl acrylate and isoctyl acrylate.

The acrylic copolymer typically is prepared from 90-97 parts by weight of the alkylester and 3-10 parts by weight of acrylic acid. Other ratios, of course, may be employed. These copolymers are known as shown by U.S. Patent No. Re 24,906 and U.S. Patent No. 2,925,174.

The water-insoluble imidazole compounds and nitrogen-containing sulfur compounds utilised as microbicidal and fungicidal agents in the present invention have the advantage that they neither disperse with nor react with water.

Under very damp conditions, water-soluble alkyl amines, organic halogen compounds and pyridinium salts disperse with water and their microbicidal and fungicidal properties are reduced.

In addition, cation-type compounds including quaternary ammonium salt degrade the adhesive dispersion because of their ionic properties.

Specific exampls of water-insoluble imidazole compounds useful in the present invention include, benzoimidazole derivatives such as 2-methoxy carbonyl aminobenzoimidazole and 2-(4-thiozoryl)-benzoimidazole.

Specific examples of nitrogen-containing sulfur compounds useful in the present invention include pyridine derivatives such as bis (2-pyridylthio-1-oxide) zinc and (2-pyridylthio-1-oxide) sodium.

The microbicidal and fungicidal agents are added so as to provide a total concentration of these ingredients of preferably from 0.01-10% by weight based on whole weight of adhesive composition. Desirably, they comprise from 0.05-1% by weight of the adhesive composition.

When the amount of microbicidal and fungicidal agents is too low, the growth of microorganisms and fungi cannot be restricted efficiently. When the amount is too great, the microbicidal and fungicidal properties are improved; however, the adhesion performance is reduced because the adhesive's viscosity increases. Furthermore, the cost performance is also reduced because of unit cost increases.

In the following Examples, all composition amounts are in parts by weight.

Example 1

An adhesive according to the invention was prepared from the following materials:

| Ingredient | Parts by Weight |
|---|---|
| Acrylic copolymer of 95 parts isooctyl acrylate and 5 parts by weight acrylic acid in water. | 61.45 |
| Dispersion of rosin ester in water (Super Ester E-720 from Arakawa Chemical Co.) | 33.80 |
| Silicone Oil (SH-5500 from Shin-Etsu Chemical Co.) | 0.05 |
| Thickening Agent | 3.69 |
| Microbicidal/Fungicidal Solution (Almoder OMC-52) | 1.00 |

Said thickener solution was prepared by dissolving 1.35 parts by weight sodium salt of carboxymethyl cellulose (Celloken WS-C produced by Daiichi Kogyo Yakuhin Co.) uniformly in 78.60 parts by weight water.

Said Amolden OMC-52 was composed of 2 methoxycarbonyl aminobenzoimidazole, bis (2-pyridylthio-1-oxide) zinc, anion-type surfactant and water in a ratio of 5:2:6:87.

Example 2

An adhesive according to the invention was prepared from the following materials:

| Ingredient | Parts by Weight |
|---|---|
| Acrylic copolymer emulsion (Aron A-2500 from Toagosei Chemical Industries) | 61.45 |
| Super Ester E-720 | 33.80 |
| SH-5500 | 0.05 |
| Thickening Agent (as in Example 1) | 3.69 |
| Almoder OMC-52 | 1.00 |

Because the main ingredient of the adhesive composition of the present invention was a water-resistant acrylic copolymer and water-insoluble imidazole compounds were used as microbicidal and fungicidal agents, the microbicidal and fungicidal agents did not disperse from the adhesive layer under very wet conditions and good microbicidal and fungicidal properties were exhibited. Further, it was found that the addition of imidazole compounds to the acrylic emulsion in the present invention raises adhesive strength (shearing tensile strength and exfoliation strength), compared with the case that imidazole compounds are not added.

The results of the adhesive strength test are as follows.

Adhesive strength test

The adhesive was laid on the surface of floor boards and dried for a fixed time. The backing side of a carpet tile was applied on the floor board and left for the adhesive to harden. Tests were conducted with evaluation of tensile strength. For the evaluation, as a floor board, a vinyl chloride type P-Tile Clean C-66 (black) produced by Tajima Oyo Kako Co. was used, and as a tile carpet, Heather Square ST-100 with a backing side of vinyl chloride, produced by Sumitomo Co., was used. For the shearing tensile strength test, a specimen of size 25 x 100 $mm^2$ was used, and for the exfoliation strength test, a specimen of size 15 x 200 $mm^2$ (wrap area 25 x 25 $mm^2$) was used. The adhesive was attached with a brush only on the floor board side. The amount used was 150 ± 15 $g/m^2$ (undried) and the drying period was 10 minutes. After attachment, to press the specimen, a metal roller of 5 kg weight was rolled back and forth 6 times on the specimen. After leaving for 24 hours at a room temperature, the specimen was heated in an oven for 24 hours at 70°C and the temperature then lowered to room temperature.

This was the initial condition of the specimens. "After immersion in water" means that the specimen matured under the initial conditions was immersed in hot water at 50°C for 7 days and the temperature then lowered to room temperature, keeping the wet conditions. "After heat aging" means that the specimen that matured under initial conditions was placed in an oven at 70°C for 7 days to be aged, and the temperature then lowered to room temperature.

The specimens were subjected to exfoliation strength and shearing tensile strength tests using a tensile test machine. Tensile rate was 200 mm/min in the exfoliation test and 50 mm/min in the shearing tensile test.

Comparison Examples 1 and 2 were prepared by the process of Examples 1 and 2, respectively, except that no microbicidal agents were added. The results are shown in Table 1.

Table 1  Adhesive Strength

| | Shearing tensile strength initial kg/25 x 25 mm | Exfoliation strength (g/25 mm) | | |
| --- | --- | --- | --- | --- |
| | | Initial | After immersion in water | After heat aging |
| Example 1 | 7.9 | 680 | 690 | 760 |
| Example 2 | 7.3 | 430 | 570 | 470 |
| Comparison Example 1 (containing no microbicidal or fungicidal agent) | 6.7 | 440 | 330 | 480 |
| Comparison Example 2 (containing no microbicidal or fungicidal agent) | 5.0 | 350 | 550 | 420 |

Long-term Stability Test

The viscosity of a sample immediately after preparation is regarded as an initial viscosity (cps), and the stability is measured by the following process. The temperature of sample is prepared at 25°C, and the initial viscosity is measured with BM-type rotational viscometer No. 4 spindle 30 rpm. Next, the sample is placed in an oven at 50°C for 28 days, and then taken out from the oven. And then the temperature is lowered to room temperature and the viscosity measured bY the same process. In addition, appearance and existence of isolated gell generation were observed. The results are shown in Table 2.

Table 2

|  | Initial Viscosity | Viscosity After 50°C x 28 days |
|---|---|---|
| Example 1 | 5,900 | 6,000 (No generation of isolated gell) |
| Example 2 | 7,500 | 6,100 (No generation of isolated gell) |
| Comparison Example 1 | 4,500 | 4,500 (No generation of isolated gell) |
| Comparison Example 2 | 6,600 | 5,700 (No generation of isolated gell) |

The results of the said tests led to the following conclusion.

The adhesive strength (shearing tensile strength and exfoliation strength) between carpet and floor board in Example 1 and 2 with addition of microbicidal and fungicidal agent, is stronger than that in Comparison Examples 1 and 2 with no addition of microbicidal agent. Further, even after immersion in water and heat aging, the adhesive strength is not reduced and the exfoliation strength is stable. Although addition of the microbicidal agent raises the viscosity, little change of viscosity on standing and no generation of isolated gell are observed. It is confirmed that the long-term stability is good.

Further, the acrylic adhesive composition of the present invention had improved adhesive strength (after both immersion in water and head aging) without deteriorating the long-term stability.

As above mentioned, the acrylic adhesive composition of the present invention exhibits comparable microbicidal properties even when it is used under very moist or wet conditions, and further raises its adhesive strength as compared with conventional acrylic-type adhesives.

**Claims**

1. An acrylic aqueous dispersion-type adhesive composition characterized in that it contains an emulsion of an acrylic copolymer as a main ingredient, and a microbicidal agent selected from a water-insoluble imidazole compound and/or a nitrogen-containing sulfur compound.

2. An adhesive composition according to claim 1 wherein said microbicidal agent is said imidazole compound.

3. An adhesive composition according to claim 2 wherein said microbicidal agent comprises both said imidazole and said nitrogen-containing sulfur compound.

4. An adhesive composition according to claim 2 wherein said microbicidal agent comprises from 0.01 to 10% by weight of said composition.

5. An adhesive composition according to claim 4 wherein said microbicidal agent comprises from 0.05 to 1% by weight of said composition.

6. An adhesive composition according to claim 3 wherein said imidazole compound is selected from the group consisting of benzoimidazole derivatives and said nitrogen-containing compound is selected from the group consisting of pyridine derivatives.

7. A composition according to claim 6 wherein imidazole derivatives are selected from the group consisting of 2-methoxy carbonyl aminobenzoimidazole, 2-(4-thiozoryl)-benzoimidazole and said pyridine derivatives are selected from (2-pyridylthio-1-oxide)zinc and (2-pyridylthio-1-oxide) sodium.

**8.** A composition according to claim 6 wherein said microbicidal agent comprises said benzoimidazole derivatives.

**9.** A composition according to claim 6 wherein said microbicidal agent comprises said pyridine derivatives.

**10.** A composition according to claim 6 wherein said microbicidal agent comprises a combination of said benzoimidazole derivatives and said pyridine derivatives.

**Patentansprüche**

**1.** Wässrige Acryl-Dispersionsklebstoffzusammensetzung, dadurch gekennzeichnet, daß sie eine Emulsion eines Acryl-Copolymers als Hauptbestandteil sowie ein mikrobizides Mittel enthält, welches Mittel ausgewählt wird aus einer wasserunlöslichen Imidazolverbindung und/oder einer Stickstoff enthaltenden Schwefelverbindung.

**2.** Klebstoffzusammensetzung nach Anspruch 1, bei welcher das mikrobizide Mittel die Imidazolverbindung ist.

**3.** Klebstoffzusammensetzung nach Anspruch 2, bei welcher das mikrobizide Mittel sowohl die Imidazolverbindung als auch die Stickstoff enthaltende Schwefelverbindung umfaßt.

**4.** Klebstoffzusammensetzung nach Anspruch 2, bei welcher das mikrobizide Mittel 0,01 bis 10 Gewichtsprozent der Zusammensetzung umfaßt.

**5.** Klebstoffzusammensetzung nach Anspruch 4, bei welcher das mikrobizide Mittel 0,05 bis 1 Gewichtsprozent der Zusammensetzung umfaßt.

**6.** Klebstoffzusammensetzung nach Anspruch 3, bei welcher die Imidazolverbindung aus einer aus Benzimidazolderivaten bestehenden Gruppe ausgewählt wird und die Stickstoff enthaltende Verbindung aus einer aus Pyridinderivaten bestehenden Gruppe ausgewählt wird.

**7.** Zusammensetzung nach Anspruch 6, bei welcher Imidazolderivate ausgewählt werden aus der Gruppe, bestehend aus 2-Methoxycarbonylaminobenzimidazol, 2-(4-Thiozoryl)-benzimidazol, und die Pyridinderivate ausgewählt werden aus der Gruppe, bestehend aus (2-Pyridylthio-1-oxid)zink und (2-Pyridylthio-1-oxid)natrium.

**8.** Zusammensetzung nach Anspruch 6, bei welcher das mikrobizide Mittel die genannten Benzimidazolderivate umfaßt.

**9.** Zusammensetzung nach Anspruch 6, bei welcher das mikrobizide Mittel die genannten Pyridinderivate umfaßt.

**10.** Zusammensetzung nach Anspruch 6, bei welcher das mikrobizide Mittel eine Kombination der genannten Benzimidazolderivate und der genannten Pyridinderivate umfaßt.

**Revendications**

**1.** Composition adhésive de type dispersion aqueuse acrylique caractérisée en ce qu'elle contient une émulsion d'un copolymère acrylique comme ingrédient principal, et un agent microbicide choisi parmi un composé d'imidazole insoluble dans l'eau et/ou un composé de soufre contenant de l'azote.

**2.** Composition adhésive selon la revendication 1 dans laquelle ledit agent microbicide est ledit composé d'imidazole.

**3.** Composition adhésive selon la revendication 2 dans laquelle ledit agent microbicide comprend à la fois ledit composé d'imidazole et ledit composé de soufre contenant de l'azote.

4. Composition adhésive selon la revendication 2 dans laquelle ledit agent microbicide constitue de 0,01 à 10% en poids de ladite composition.

5. Composition adhésive selon la revendication 4 dans laquelle ledit agent microbicide constitue de 0,05 à 1% en poids de ladite composition.

6. Composition adhésive selon la revendication 3 dans laquelle ledit composé d'imidazole est choisi dans le groupe constitué par les dérivés de benzoimidazole et ledit composé contenant de l'azote est choisi dans le groupe constitué par les dérivés de pyridine.

7. Composition selon la revendication 6 dans laquelle les dérivés d'imidazole sont choisis dans le groupe constitué par le 2-méthoxy-carbonylaminobenzoimidazole, le 2-(4-thiozoryl)-benzoimidazole et lesdits dérivés de pyridine sont choisis parmi le (2-pyridylthio-1-oxyde)zinc et le (2-pyridylthio-1-oxyde)-sodium.

8. Composition selon la revendication 6 dans laquelle ledit agent microbicide comprend lesdits dérivés de benzoimidazole.

9. Composition selon la revendication 6 dans laquelle ledit agent microbicide comprend lesdits dérivés de pyridine.

10. Composition selon la revendication 6 dans laquelle ledit agent microbicide comprend une combinaison desdits dérivés de benzoimidazole et desdits dérivés de pyridine.